# EUROPÄISCHE PATENTSCHRIFT

(11) **EP 2 847 439 B1**
(45) Veröffentlichungstag und Bekanntmachung des Hinweises auf die Patenterteilung: **22.03.2017**
(21) Anmeldenummer: 13732577.5
(22) Anmeldetag: 02.07.2013
(51) Int. Cl.: F01D 9/04

(54) **ABGASTURBINE MIT GESCHLOSSENEM DÜSENRING**
EXHAUST TURBINE WITH CLOSED NOZZLE RING
TURBINE À GAZ D'ÉCHAPPEMENT COMPRENANT UNE COURONNE DIRECTRICE FERMÉE

(30) Priorität: 09.07.2012 DE 102012211950
(43) Veröffentlichungstag der Anmeldung: 18.03.2015
(73) Patentinhaber: ABB Turbo Systems AG, 5400 Baden (CH)
(72) Erfinder: KREIENKAMP, Christian, CH-5443 Niederrohrdorf (CH); JARUSEL, Matthias, 79774 Albbruck (DE); JOHO, Marcel, CH-5105 Auenstein (CH); HAUSER, Daniel, CH-5032 Aarau Rohr (CH); RICHNER, Matthias, CH-5430 Wettingen (CH)
(74) Vertreter: ABB Patent Attorneys
(86) Internationale Anmeldenummer: PCT/EP2013/063909
(87) Internationale Veröffentlichungsnummer: WO 2014/009203

(56) Entgegenhaltungen:
- EP-A1- 0 191 380
- EP-A1- 1 627 993
- EP-A2- 0 058 532
- DE-A1-102005 027 890
- DE-A1-102005 062 561
- DE-B- 1 036 581

## Beschreibung

### TECHNISCHES GEBIET

Die Erfindung bezieht sich auf das Gebiet axial angeströmter Abgasturbinen. Sie betrifft eine Abgasturbine mit einem von einer Welle getragenen Turbinenrad, einem Düsenring und einem Gaseintrittsgehäuse.

### STAND DER TECHNIK

Abgasturbinen werden vor allem in Nutzturbinen und in Abgasturboladern verwendet. Abgas einer Verbrennungsmaschine wird der Abgasturbine zugeführt. Weil das Abgas unvollständig expandiert ist, ist die noch vorhandene Energie des Abgases teilweise in Rotationsenergie der Abgasturbine umwandelbar. Bei einer axial angeströmten Abgasturbine wird das Abgas durch ein äusseres Gaseintrittsgehäuse axial auf ein innerhalb des äusseren Gaseintrittsgehäuses positioniertes und drehbar gelagertes Turbinenrad geleitet. Das Turbinenrad umfasst einen Nabenkörper und auf dem Nabenkörper befestigte Laufschaufeln, an welchen Laufschaufeln die Abgasströmung Arbeit verrichtet und so die Energie des Abgases teilweise in Rotationsenergie des Turbinenrades umwandelt. Stromaufwärts des Turbinenrads befindet sich ein Düsenring, welcher Düsenring Leitschaufeln aufweist. Die Leitschaufeln leiten die Abgasströmung in einem optimalen Winkel auf die Laufschaufeln. Damit sich stromaufwärts des Nabenkörpers und des Düsenrings kein Staubereich der Abgasströmung ausbildet, ist ein inneres Gaseintrittsgehäuse axial in Strömungsrichtung vor dem Nabenkörper und dem Düsenring konzentrisch angeordnet.

Für den Wirkungsgrad ist es wichtig, dass ein möglichst hoher Anteil des Abgases durch den Bereich der Leitschaufeln und Laufschaufeln hindurchströmt. Deshalb sind Leckagen der Abgasströmung, welche ein Umgehen des Bereichs der Leitschaufeln und Laufschaufeln für das Abgas ermöglichen, zu vermeiden. Ein Bereich für eine mögliche Leckage radial innen an den Leitschaufeln und Laufschaufeln vorbei ist der Bereich zwischen dem Düsenring und dem inneren Gaseintrittsgehäuse.

Bei den bekannten Abgasturbinen erfolgt die Abdichtung zwischen dem Düsenring und dem inneren Gaseintrittsgehäuse durch eine Kontaktfläche oder ein statisches Dichtelement zwischen dem Düsenring und dem inneren Gaseintrittsgehäuse.

DE 19651318 beschreibt eine Abgasturbine, bei welcher Abgasturbine der Düsenring an einem Aussenring des Düsenrings durch das äussere Gaseintrittsgehäuse in einer Klemmverbindung so positioniert ist, dass keine Relativbewegung zwischen dem Düsenring und dem äusseren Gaseintrittsgehäuse auftritt. Das innere Gaseintrittsgehäuse ist über eine Rippe fest mit dem äusseren Gaseintrittsgehäuse verbunden, so dass sich eine Kontaktfläche mit einer Flächenpressung zwischen dem inneren Gaseintrittsgehäuse und einem Innenring des Düsenrings ergibt, welche Kontaktfläche den Bereich zwischen dem Düsenring und dem inneren Gaseintrittsgehäuse abdichtet. Im Betrieb der Abgasturbine können aber unterschiedliche thermische Dehnungen dazu führen, dass durch resultierende plastische Verformungen die Abdichtung vermindert wird oder sogar ein Spalt auftritt.

DE 1036581 beschreibt eine Abgasturbine mit einem Düsenring, welcher Düsenring durch einen Deckel innen geschlossenen. Dadurch entfallt die Dichtstelle zwischen dem Düsenring und dem inneren Gaseintrittsgehäuse und wird auf eine technisch einfachere Abdichtung zwischen dem Düsenring und dem Deckel verlagert. Problematisch ist aber, dass es aufgrund von Temperaturschwankungen zu thermischen Spannungen und einer daraus folgenden Ermüdung im Deckel kommt.

### DARSTELLUNG DER ERFINDUNG

Aufgabe der vorliegenden Erfindung ist es, eine Abdichtung für eine Abgasturbine zwischen einen Düsenring und einem inneren Gaseintrittsgehäuse zur Verfügung zu stellen, welche Abdichtung im Betrieb eine verbesserte Dichtwirkung aufweist und dabei ein besseres thermomechanisches Verhalten aufweist.

Diese Aufgabe wird durch eine Abgasturbine mit den Merkmalen des Patentanspruchs 1 gelöst. Bevorzugte Ausführungsformen sind Gegenstand der abhängigen Patentansprüche.

Gegenstand der Erfindung ist es, dass eine Abgasturbine gemäss dem Oberbegriff des Anspruchs 1 einen innen geschlossenen Düsenring aufweist. Dabei weist der Düsenring Leitschaufeln und einen bezüglich des Leitschaufeln radial innen liegen Innenring auf. Eine innere, durch den Innenring begrenzte Fläche des Düsenrings ist durch einen Deckel ausgefüllt und bezüglich einer Gasströmung abgedichtet, so dass die innere Fläche bezüglich einer Durchströmung durch das Abgas oder eines anderen Gases wie beispielsweise Frischluft zur Kühlung des Turbinenrades geschlossen ist. So verhindert der Deckel ein Umgehen der Leitschaufeln durch ein Gas im Bereich der inneren Fläche des Düsenrings. Der Deckel weist eine Wölbung auf die dem Turbinenrad abgewandte Seite des Deckels auf. Dies ermöglicht eine kompaktere Bauweise, reduziert die Steifigkeit des Deckels und verbessert das thermomechanische Verhalten des Deckels.

Eine erste bevorzugte Ausführungsform betrifft eine lösbare Verbindung zwischen Deckel und dem Düsenring, wie beispielsweise eine Bolzenverbindung. Dies ermöglicht ein Nachrüsten eines Düsenrings mit einem Deckel und einen einfachen Austausch des Deckels im Wartungsfall.

Eine weitere bevorzugte Ausführungsform betrifft eine unlösbare Verbindung zwischen Deckel und dem Düsenring, wie beispielsweise eine Schweissverbindung. Dies ermöglicht ein Nachrüsten eines Düsenrings durch eine wartungsfreie Verbindung.

Eine weitere bevorzugte Ausführungsform betrifft einen Düsenring, bei welchem der Innenring und der Deckel in einander integriert sind und aus einem Stück bestehen. Dies ermöglicht eine vereinfachte Herstellung und eine Reduktion der vorhandenen Einzelteile.

Eine weitere bevorzugte Ausführungsform betrifft einen Deckel mit einer Wandstärke, welche Wandstärke radial innen geringer ist als radial. Dies verbessert die Giessbarkeit des Deckels vor allem bei einer Speisung von aussen.

Eine weitere bevorzugte Ausführungsform betrifft einen Deckel, welcher Deckel in axialer Richtung in der Mitte des Innenrings des Düsenrings ansetzt. Dies verbessert die thermomechanische Ermüdung und die Giessbarkeit des Deckels.

Eine weitere bevorzugte Ausführungsform betrifft eine Abgasturbine mit Zentrierbolzen zwischen dem Deckel und dem inneren Gaseintrittsgehäuse, wobei die Zentrierbolzen den Deckel und das innere Gaseintrittsgehäuse in radialer Richtung zueinander positionieren. Dies reduziert die Laufschaufelschwingungen.

Eine weitere bevorzugte Ausführungsform betrifft eine Abgasturbine mit einer Dichtung zwischen dem Deckel und dem inneren Gaseintrittsgehäuse, wobei die Dichtung einen Druckabfall zwischen dem radial aussen strömenden Abgas und dem radial innen mit dem Deckel in Kontakt stehenden Abgas bewirkt. Dies reduziert die mechanische Druckbelastung des Deckels.

### KURZE BESCHREIBUNG DER FIGUREN

Nachfolgend wird die Erfindung anhand von Ausführungsbeispielen im Zusammenhang mit den Figuren näher erläutert. Die Figuren zeigen eine schematische Darstellung eines Axialschnitts:
- Figur 1: einer axial angeströmten Abgasturbine mit einem Düsenring und einem geraden, integrierten Deckel;
- Figur 2: einer axial angeströmten Abgasturbine mit einem Düsenring, einem gewölbten, integrierten Deckel, einer Dichtung zwischen dem Düsenring und einem inneren Gaseintrittsgehäuse und einer Dichtung zwischen dem Düsenring und einem inneren Gaseintrittsgehäuse;
- Figur 3: eines Düsenrings mit einem eingeschweissten geraden Deckel;
- Figur 4: eines Düsenrings mit einem angeschraubten, geraden Deckel; und
- Figur 5: eines Düsenring mit einem eingeschweissten geraden Deckel und eines inneren Gaseintrittsgehäuses mit Zentrierbolzen.

Die in den Zeichnungen verwendeten Bezugszeichen sind in der Bezugszeichenliste zusammengefasst. Grundsätzlich sind gleiche Teile mit denselben Bezugszeichen versehen.

### WEGE ZUR AUSFÜHRUNG DER ERFINDUNG

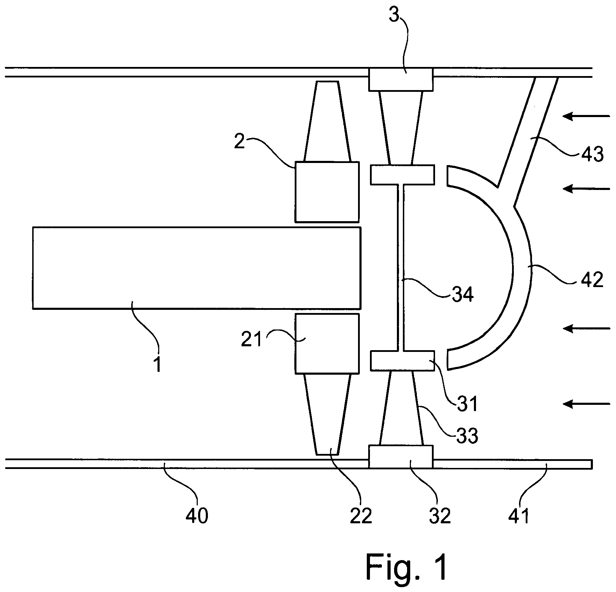

Fig. 1 zeigt eine axial angeströmte Abgasturbine in einer schematischen Darstellung eines Axialschnitts. Die Abgasturbine ist nach aussen hin durch ein zweiteiliges, äusseres Gaseintrittsgehäuse 40, 41, welches äusseres Gaseintrittsgehäuse 40, 41 rohrförmig ist, begrenzt. Ein Turbinenrad 2 ist konzentrisch innerhalb des äusseren Gaseintrittsgehäuses 40, 41 angeordnet und ist durch eine Welle 1 drehbar gelagert. Das Turbinenrad 2 weist einen Nabenkörper 21 und Laufschaufeln 22 auf. Axial um die Welle 1 herum ist der zylinderförmige Nabenkörper 21 angeordnet. Auf der äusseren Mantelfläche des Nabenkörpers 21 sind die Laufschaufeln 22 befestig und in Umfangsrichtung verteilt. Um ein kollisionsfreies Drehen des Turbinenrads 2 zu gewährleisten, sind die Längen der Laufschaufeln 22 so bemessen, dass ein Spalt zwischen radial aussen liegenden Enden der Laufschaufeln 22 und dem äusseren Gaseintrittgehäuse 40, 41 existiert. Stromaufwärts des Turbinenrads 2 befindet sich ein Düsenring 3, welcher Düsenring 3 konzentrisch zum Turbinenrad 2 angeordnet ist. Dieser Düsenring 3 weist einen Innenring 31, einen Aussenring 32, Leitschaufeln 33 und einen Deckel 34 auf. Der Düsenring 3 ist am Aussenring 32 zwischen den zwei Teilen 40, 41 des äusseren Gaseintrittsgehäuses eingeklemmt und so fest im Raum positioniert. Die Leitschaufeln 33 sind zwischen dem Innenring 31 und dem Aussenring 32 angeordnet und fest mit dem Innenring 31 und dem Aussenring 32 verbunden. Eine von dem Innenring 31 umschlossene innere Fläche des Innenrings 31 ist gemäss einer ersten erfindungsgemässen Ausführungsform durch den Deckel 34 geschlossen, so dass kein Abgas durch die innere Fläche des Innenrings 31 hindurchströmt. Dabei ist der Deckel 34 optional in den Innenring 31 integriert und der Deckel 34 und der Innenring 31 sind optional einstückig hergestellt, beispielsweise durch Giessen oder Schmieden. Ein inneres Gaseintrittsgehäuse 42, welches sich stromaufwärts des Turbinenrads 2 und des Düsenrings 3 befindet, ist konzentrisch zum Innenring 31 angeordnet und ist mit dem äusseren Gaseintrittsgehäuse 41 beispielsweise über eine Rippe 43 verbunden.

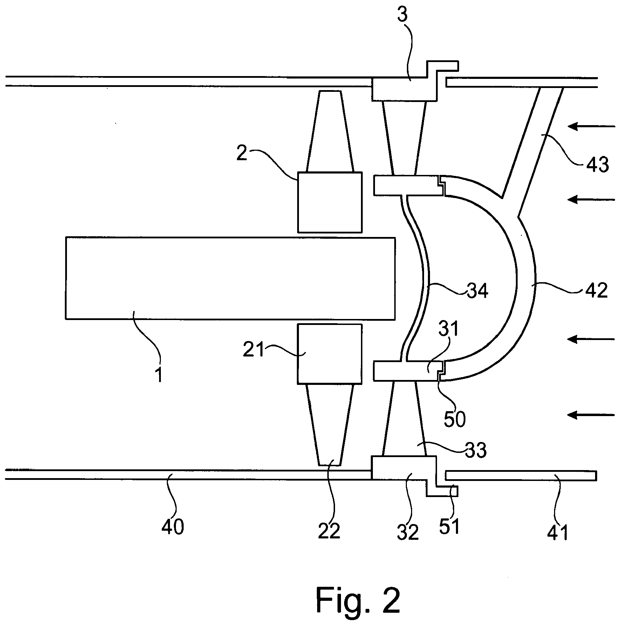

Fig. 2 zeigt eine axial angeströmte Abgasturbine in einer schematischen Darstellung eines Axialschnitts. Die Welle 1 schliesst optional nicht mit dem Nabenkörper 21 bündig ab, sondern ragt über das Turbinenrad 2 in Richtung des Düsenrings 3 hinaus. Der Düsenring 3 ist am Aussenring 32 mit dem stromabwärts gelegenen Teil 40 des äusseren Gaseintrittsgehäuses verbunden und kann während Montagearbeiten gemeinsam mit dem stromabwärts gelegenen Teil 40 des äusseren Gaseintrittsgehäuses axial in Strömungsrichtung von dem stromaufwärts gelegenen Teil 41 des äusseren Gaseintrittsgehäuses weggezogen werden. Zwischen dem Aussenring 32 und dem stromaufwärts gelegenen Teil 41 des äusseren Gaseintrittsgehäuses weist die Abgasturbine optional eine erste Dichtung 51 auf, welche Dichtung 51 eine Leckage des Abgases radial aussen um den Düsenring herum verhindert. Der Deckel 34 des Düsenrings 3 ist optional in Richtung des inneren Gaseintrittsgehäuses 42 gewölbt und weist optional eine sich in radialer Richtung nach innen verjüngende Wandstärke auf. Zwischen dem Innenring 31 und dem inneren Gaseintrittsgehäuse 42 weist die Abgasturbine eine zweite Dichtung 50 auf. Die erste und zweite Dichtung 50, 51 können beispielsweise Labyrinthdichtungen sind oder ein statisches Dichtelement aufweisen.

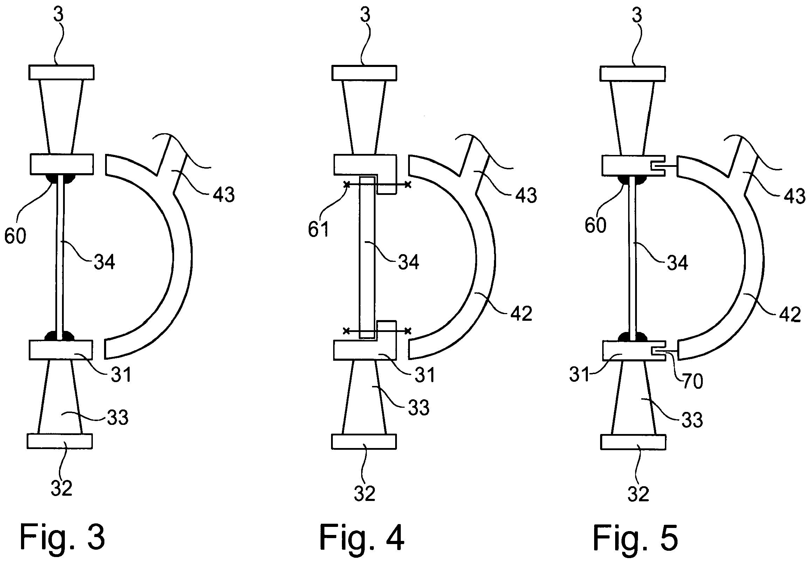

Fig. 3 zeigt dem Düsenring 3 und das innere Gaseintrittgehäuse in einer schematischen Darstellung eines Axialschnitts. Der Deckel 34 ist mit einer Schweissverbindung 60 mit dem Innenring 31 verbunden.

Fig. 4 zeigt dem Düsenring 3 und das innere Gaseintrittgehäuse in einer schematischen Darstellung eines Axialschnitts. Der Deckel 34 ist mit einer Bolzenverbindung 61 mit dem Innenring 31 verbunden.

Fig. 5 zeigt dem Düsenring 3 und das innere Gaseintrittgehäuse 42 in einer schematischen Darstellung eines Axialschnitts. Das innere Gaseintrittsgehäuse 42 weist an einer dem Düsenring 3 zugewandten Seite Zentrierbolzen 70 auf, welche Zentrierbolzen 70 in dafür vorgesehene Aussparungen in dem Innenring 31 positioniert sind.

Die Verbindungsart des Deckels 34 mit dem Düsenring 3 kann von der dargestellten Bolzenverbindung 61, Schweissverbindung 60 oder der einstückigen Ausführung abweichen. Die Ansatzposition des Deckels 34 muss nicht in der Mitte des Innenrings 31 sein. Es ist auch möglich den Deckel 34 an den Enden der inneren Mantelfläche der Innenrings 31 oder an den Stirnflächen des Innenrings 31 anzusetzen.

### BEZUGSZEICHENLISTE

- 1: Welle
- 2: Turbinenrad
- 21: Nabenkörper des Turbinenrads
- 22: Laufschaufel des Turbinenrads
- 3: Düsenring
- 31: Innenring des Düsenrings
- 32: Aussenring des Düsenrings
- 33: Leitschaufel des Düsenrings
- 34: Deckel des Düsenrings
- 40, 41: äusseres Gaseintrittsgehäuse
- 42: inneres Gaseintrittsgehäuse
- 43: Rippe
- 50, 51: Dichtung
- 60: Schweissverbindung
- 61: Bolzenverbindung
- 70: Zentrierbolzen

## Patentansprüche

1. Abgasturbine, welche Abgasturbine axial angeströmt wird, mit
einem von einer Welle (1) getragenen Turbinenrad (2), welches
Turbinenrad (2) Laufschaufeln (22) zur Umsetzung einer Energie eines Abgases in eine Drehbewegung des Turbinenrads (2) aufweist,
einem Düsenring (3), welcher Düsenring (3) einen Innenring (31) und von dem Innenring (31) radial aussen liegende Leitschaufeln (33) zum Leiten des Abgases aufweist und stromaufwärts von dem Turbinenrad (2) positioniert ist, und
einem Gaseintrittsgehäuse, welches Gaseintrittsgehäuse ein äusseres Gaseintrittsgehäuse(40, 41), welches äussere Gaseintrittsgehäuse (40, 41) aussen um das Turbinenrad (2), den Düsenring (3) und die Welle (1) herum angeordnet ist, und
ein inneres Gaseintrittsgehäuse (42), welches innere Gaseintrittsgehäuse (42) innerhalb des äusseren Gaseintrittsgehäuses (40, 41) und stromaufwärts des Düsenrings (3) positioniert ist, wobei
eine innere, durch den Innenring (31) begrenzte Fläche des Düsenrings (3) durch einen Deckel (34) bezüglich der Durchströmung in axialer Richtung durch das Abgas in radialer Richtung vollständig geschlossen ist und
so ein Umgehen der Leitschaufeln (33) durch das Abgas im Bereich der inneren Fläche des Düsenrings(3) verhindert, **dadurch gekennzeichnet, dass**
der Deckel (34) eine Wölbung auf eine dem Turbinenrad (2) abgewandte Seite aufweist.

2. Abgasturbine nach Anspruch 1, **dadurch gekennzeichnet, dass** der Deckel (34) mit dem Düsenring (3) über eine lösbare Verbindung verbunden ist.

3. Abgasturbine nach Anspruch 1, **dadurch gekennzeichnet, dass** der Deckel (34) mit dem Düsenring (3) über eine unlösbare Verbindung verbunden ist.

4. Abgasturbine nach Anspruch 1, **dadurch gekennzeichnet, dass** der Deckel (34) und der Innenring (31) des Düsenrings (3) einstückig ausgebildet sind.

5. Abgasturbine nach einem der Ansprüche 1 bis 4, **dadurch gekennzeichnet, dass** der Deckel (34) einen radial innen liegenden Bereich mit einer geringeren Wandstärke als ein radial aussen liegender Bereich aufweist.

6. Abgasturbine nach einem der Ansprüche 1 bis 5, **dadurch gekennzeichnet, dass** der Deckel (34) in axialer Richtung mittig an den Innenring (31) des Düsenrings (3) ansetzt.

7. Abgasturbine nach einem der Ansprüche 1 bis 6, **dadurch gekennzeichnet, dass** die Abgasturbine zwischen dem Deckel (34) und dem inneren Gaseintrittsgehäuse (42) Zentrierbolzen (70) aufweist, welche Zentrierbolzen (70) den Deckel (34) und das innere Gaseintrittsgehäuse (42) in radialer Richtung zueinander positionieren.

8. Abgasturbine nach einem der Ansprüche 1 bis 7, **dadurch gekennzeichnet, dass** die Abgasturbine zwischen dem Deckel (34) und dem inneren Gaseintrittsgehäuse (42) eine Dichtung (50) aufweist, welche Dichtung (50) einen Druck des Abgases auf den Deckel (34) im Bereich des inneren Gaseintrittsgehäuses (42) reduziert.

9. Turbolader, umfassend eine Abgasturbine nach einem der Ansprüche 1 bis 8.

10. Nutzturbine, umfassend eine Abgasturbine nach einem der Ansprüche 1 bis 8.

## Claims

1. Exhaust gas turbine, which exhaust gas turbine has axial incident flow, with
a turbine wheel (2) borne by a shaft (1), which turbine wheel (2) has rotor blades (22) for converting energy of an exhaust gas into rotational movement of the turbine wheel (2),
a nozzle ring (3), which nozzle ring (3) has an inner ring (31) and guide vanes (33), located radially outside the inner ring (31), for guiding the exhaust gas, and is positioned upstream of the turbine wheel (2), and
a gas inlet housing, which gas inlet housing has
an outer gas inlet housing (40, 41), which outer gas inlet housing (40, 41) is arranged outside and surrounding the turbine wheel (2), the nozzle ring (3) and the shaft (1), and
an inner gas inlet housing (42), which inner gas inlet housing (42) is positioned inside the outer gas inlet housing (40, 41) and upstream of the nozzle ring (3), wherein
an inner surface of the nozzle ring (3), bounded by the inner ring (31), is completely closed in the radial direction by a cover (34), with respect to the throughflow in the axial direction by the exhaust gas, and
thus the exhaust gas is prevented from bypassing the guide vanes (33) in the region of the inner surface of the nozzle ring (3), **characterized in that**
the cover (34) has a curvature on a side oriented away from the turbine wheel (2).

2. Exhaust gas turbine according to Claim 1, **characterized in that** the cover (34) is connected to the nozzle ring (3) by means of a releasable connection.

3. Exhaust gas turbine according to Claim 1, **characterized in that** the cover (34) is connected to the nozzle ring (3) by means of a permanent connection.

4. Exhaust gas turbine according to Claim 1, **characterized in that** the cover (34) and the inner ring (31) of the nozzle ring (3) are designed in one piece.

5. Exhaust gas turbine according to one of Claims 1 to 4, **characterized in that** the cover (34) has a radially inner region with thinner walls than a radially outer region.

6. Exhaust gas turbine according to one of Claims 1 to 5, **characterized in that** the cover (34) is seated centrally in the axial direction on the inner ring (31) of the nozzle ring (3).

7. Exhaust gas turbine according to one of Claims 1 to 6, **characterized in that** the exhaust gas turbine has centring bolts (70) between the cover (34) and the inner gas inlet housing (42), which centring bolts (70) position the cover (34) and the inner gas inlet housing (42) relative to one another in the radial direction.

8. Exhaust gas turbine according to one of Claims 1 to 7, **characterized in that** the exhaust gas turbine has a seal (50) between the cover (34) and the inner gas inlet housing (42), which seal (50) reduces the pressure of the exhaust gas on the cover (34) in the region of the inner gas inlet housing (42).

9. Turbocharger, comprising an exhaust gas turbine according to one of Claims 1 to 8.

10. Power turbine, comprising an exhaust gas turbine according to one of Claims 1 to 8.

## Revendications

1. Turbine à gaz d'échappement, ladite turbine à gaz d'échappement étant abordée axialement, avec
une roue de turbine (2) portée par un arbre (1), ladite roue de turbine (2) présentant des aubes mobiles (22) pour la conversion d'une énergie des gaz d'échappement en un mouvement de rotation de la roue de turbine (2),
une couronne (3), ladite couronne (3) présentant un anneau intérieur (31) et des aubes directrices (33) situées radialement à l'extérieur de l'anneau intérieur (31) pour le guidage des gaz d'échappement et étant positionnée en amont de la roue de turbine (2), et
un corps d'entrée des gaz, ledit corps d'entrée des gaz comprenant
un corps d'entrée des gaz extérieur (40, 41), ledit corps d'entrée des gaz extérieur (40, 41) étant disposé extérieurement autour de la roue de turbine (2), de la couronne (3) et de l'arbre (1), et
un corps d'entrée des gaz intérieur (42), ledit corps d'entrée des gaz intérieur (42) étant positionné à l'intérieur du corps d'entrée des gaz extérieur (40, 41) et en amont de la couronne (3),
dans laquelle
une face intérieure de la couronne (3), limitée par l'anneau intérieur (31), est entièrement fermée en direction radiale par un couvercle (34) par rapport à l'écoulement en direction axiale des gaz d'échappement, et empêche ainsi un contournement des aubes directrices (33) par les gaz d'échappement dans la région de la face intérieure de la couronne (3), **caractérisée en ce que** le couvercle (34) présente une courbure sur un côté situé à l'opposé de la roue de turbine (2).

2. Turbine à gaz d'échappement selon la revendication 1, **caractérisée en ce que** le couvercle (34) est assemblé à la couronne (3) par un assemblage démontable.

3. Turbine à gaz d'échappement selon la revendication 1, **caractérisée en ce que** le couvercle (34) est assemblé à la couronne (3) par un assemblage indémontable.

4. Turbine à gaz d'échappement selon la revendication 1, **caractérisée en ce que** le couvercle (34) et l'anneau intérieur (31) de la couronne (3) sont réalisés en une seule pièce.

5. Turbine à gaz d'échappement selon l'une quelconque des revendications 1 à 4, **caractérisée en ce que** le couvercle (34) présente une région située radialement à l'intérieur avec une épaisseur de paroi plus faible qu'une région située radialement à l'extérieur.

6. Turbine à gaz d'échappement selon l'une quelconque des revendications 1 à 5, **caractérisée en ce que** le couvercle (34) s'applique en direction axiale au milieu sur l'anneau intérieur (31) de la couronne (3).

7. Turbine à gaz d'échappement selon l'une quelconque des revendications 1 à 6, **caractérisée en ce que** la turbine à gaz d'échappement présente des boulons de centrage (70) entre le couvercle (34) et le corps d'entrée des gaz intérieur (42), lesdits boulons de centrage (70) positionnant le couvercle (34) et le corps d'entrée des gaz intérieur (42) l'un par rapport à l'autre en direction radiale.

8. Turbine à gaz d'échappement selon l'une quelconque des revendications 1 à 7, **caractérisée en ce que** la turbine à gaz d'échappement présente un joint d'étanchéité (50) entre le couvercle (34) et le corps d'entrée des gaz intérieur (42), ledit joint d'étanchéité (50) réduisant une pression des gaz d'échappement sur le couvercle (34) dans la région du corps d'entrée des gaz intérieur (42).

9. Turbocompresseur comprenant une turbine à gaz d'échappement selon l'une quelconque des revendications 1 à 8.

10. Turbine de puissance, comprenant une turbine à gaz d'échappement selon l'une quelconque des revendications 1 à 8.
